# EUROPEAN PATENT APPLICATION

(11) **EP 4 299 837 A1**
(43) Date of publication of application: **03.01.2024**
(21) Application number: 23179081.7
(22) Date of filing: 14.06.2023
(51) Int. Cl.: E02F 9/08, B60R 19/02, E02F 9/24

(54) **ANTI-COLLISION STRUCTURE FOR AN ENGINEERING MACHINE AND THE ENGINEERING MACHINE**

(30) Priority: 30.06.2022 CN 202221689998 U
(71) Applicant: Caterpillar, Inc., Peoria, IL 61629-6450 (US)
(72) Inventor: WANG, Shengzhong, Qingdao, 266100 (CN); LI, Aifang, Qingdao, 266100 (CN); CHENG, Weijian, Qingdao, 266100 (CN); SUN, Yutao, Qingdao, 266100 (CN); WANG, Zhijun, Qingdao, 266100 (CN)
(74) Representative: Boult Wade Tennant LLP

(57) **Abstract**

The disclosure relates to an anti-collision structure for an engineering machine, the engineering machine has a tail frame (200) arranged at a rear end. The anti-collision structure comprises an anti-collision body that at least partially covers side walls (210, 220) and a rear end wall (230) of the tail frame, wherein the anti-collision body is made of plates and configured to have a streamline shape and a hollow structure. The anti-collision structure of the disclosure can effectively avoid collision to the rear end or tail of the engineering machine when the machine climbs or reverses, which improves the overall strength and impact-resistance of the tail frame and the main frame of the engineering machine. In addition, the three-dimensional streamlined shape of the anti-collision structure matches the whole vehicle in style, adding highlights for the electric driver. The disclosure also relates to an engineering machine comprising the anti-collision structure.

## Description

### Technical Field

The present disclosure relates to technologies for protecting an engineering machine, in particular to an anti-collision structure for protecting the rear end or tail of the engineering machine. The disclosure also relates to an engineering machine, e.g. a loader, comprising the anti-collision structure.

### Background Art

As is well known, engineering machines, such as loaders, usually work in wild areas with complex terrain and are therefore vulnerable to impacts such as collisions. To this end, the body shell of the engineering machine, especially its rear part opposite to the working tool like the bucket, is usually made of thick steel plates or iron blocks, so that it can be used as a functional structure such as a counterweight on the one hand, and can resist impact damage in the wild harsh environment on the other hand. However, for some engineering machines with a specific structure, they may not be adapted to be protected in conventional ways.

For example, the engineering machine using a battery pack as power source has been developed. Since the battery pack is large and heavy, it is usually placed in the vehicle body frame, especially in the tail frame at the rear end of the vehicle body, while such body part as conventional counterweight can be omitted, so that the battery pack can be used as both a power source and a counterweight of the engineering machine. In this case, it is necessary to provide impact protection for the tail frame, preventing it and thus the battery pack therein from being damaged due to collision when the engineering machine climbs or retreats.

### Summary of the Invention

It is an object of the disclosure to provide an anti-collision structure for an engineering machine, especially for protecting the rear end or the tail frame of the engineering machine from being damaged due to collision when the engineering machine climbs or reverses.

Specifically, the disclosure provides an anti-collision structure for an engineering machine, the engineering machine has a tail frame at its rear end, wherein the anti-collision structure comprises an anti-collision body that at least partially covers side walls and the rear end wall of the tail frame, and the anti-collision body is made of plates and configured to have a streamline shape and a hollow structure.

The anti-collision structure of the disclosure is arranged on the tail frame of the engineering machine, which effectively avoids collision damage to the rear end or tail of the engineering machine when the engineering machine climbs or reverses. The anti-collision structure improves the overall strength and impact-resistance of the tail frame and main frame of the engineering machine, and allows the installation and layout of related components and lines required by electric equipment under the premise of meeting the strength. The anti-collision structure of the disclosure has a three-dimensional streamlined shape, matching the whole vehicle in style and adding highlights to the electric driver.

On the other hand, the disclosure provides an engineering machine, which comprises a tail frame arranged at the rear end thereof and the above-mentioned anti-collision structure installed on the tail frame.

### Brief Description of the Drawings

The details and advantages of the disclosure can be understood through the following description with reference to the accompanying drawings and in conjunction with specific embodiments. In the drawings:
Fig. 1 is a perspective view of the anti-collision structure and the tail frame according to a preferred embodiment of the disclosure viewed obliquely from above;
Fig. 2 is a perspective view of the anti-collision structure and the tail frame according to a preferred embodiment of the disclosure viewed obliquely from below;
Fig. 3 is a perspective view of the front coaming plate assembly according to a preferred embodiment of the disclosure;
Fig. 4 is a perspective view of the intermediate coaming plate assembly according to a preferred embodiment of the disclosure;
Fig. 5 is a perspective view of the rear coaming plate assembly according to a preferred embodiment of the disclosure;
Fig. 6 is a perspective view of the left upper wing assembly according to a preferred embodiment of the disclosure.

### Detailed Description of the Embodiments

The technical solution of the present disclosure is described in detail below through embodiments and in conjunction with the accompanying drawings. The description is intended to interpret the general concept of the present disclosure, and should not be construed as a limitation of the present disclosure.

In the following description, directions are defined with reference to the engineering machine itself on the ground, where the direction extending between the head (specifically the end of the engineering machine on which a work implement is mounted) and the tail of the engineering machine is defined as "longitudinal direction", and the direction perpendicular to the longitudinal direction is defined as "transverse direction" or "lateral direction". The direction or section of the engineering machine facing the ground is referred as "lower" or "bottom", and the opposite direction or section facing the sky is referred as "upper" or "top". Moreover, in the present disclosure, "left", "right", "front", and "rear" are all defined based on the head of the engineering machine or the direction in which the engineering machine advances, and have the meanings of orientation commonly used in the art.

The anti-collision structure of the present disclosure can be attached to the frame of the engineering machine, especially a loader, and the frame may especially be a tail frame arranged at the rear end of the engineering machine. The tail frame may be a separately manufactured component, and may then be connected to the main frame or the chassis of the engineering machine especially in a material bonding manner, e.g., by welding. The tail frame may be specially used to accommodate the power battery pack and/or electric equipment. Of course, the tail frame may also be a part of the main frame of the engineering machine, especially be a rear or tail part of the frame.

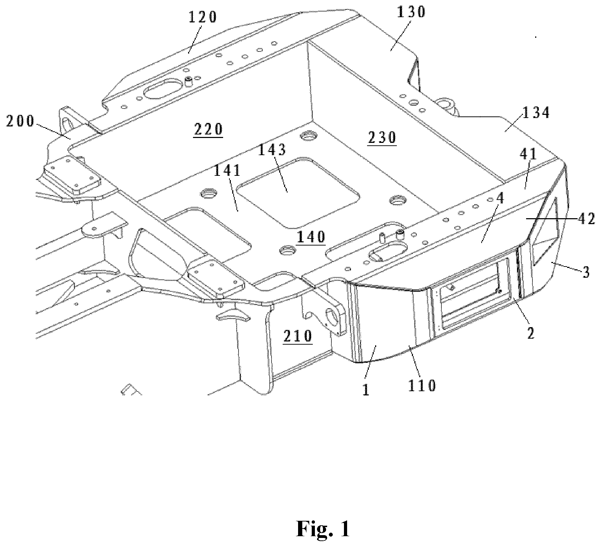

Referring to Figs. 1-2, the anti-collision structure of the disclosure may be connected to a tail frame 200 of the engineering machine, and may then be connected to the main frame or chassis of the engineering machine together with the tail frame 200 by, for example, welding. The tail frame 200 may be a rectangular frame composed of a left side wall 210, a right side wall 220, a rear end wall 230, a front end wall, etc. The anti-collision structure may consist of an anti-collision body attached to outer surfaces of left and right side walls 210, 220 and the rear end wall 230 of the tail frame 200 so as to at least partially cover these walls. In particular, the anti-collision body may be formed by splicing plates, e.g., steel plates, and has a generally streamlined shape and a hollow structure.

Preferably, the anti-collision body of the anti-collision structure may be installed onto the left and right side walls 210, 220 as well as the rear end wall 230 of the tail frame 200 in a material bonding manner, for example, by welding, so that it can form an integral part of the tail frame 200.

Specifically, the anti-collision structure may comprise a left anti-collision body portion 110 at least partially and preferably completely covering the left side wall 210 of the tail frame 200, a right anti-collision body portion 120 at least partially and preferably completely covering the right side wall 220 of the tail frame 200, and a rear anti-collision body portion 130 at least partially and preferably completely covering the rear end wall 230 of the tail frame 200. The left anti-collision body portion 110 and the right anti-collision body portion 120 may each have a streamlined shape viewed along the longitudinal direction, and the rear anti-collision body portion 130 may have a streamlined shape viewed along the transverse direction.

As can be clearly seen from Figs. 1-2, the streamlined shape means that the thickness (i.e., the dimensions measured perpendicularly to the relevant directions) of each of the anti-collision body portions decreases gradually from the middle to both ends in relevant directions (in the longitudinal direction for the left and right anti-collision body portions 110, 120; in the lateral direction for the rear anti-collision body portion 130).

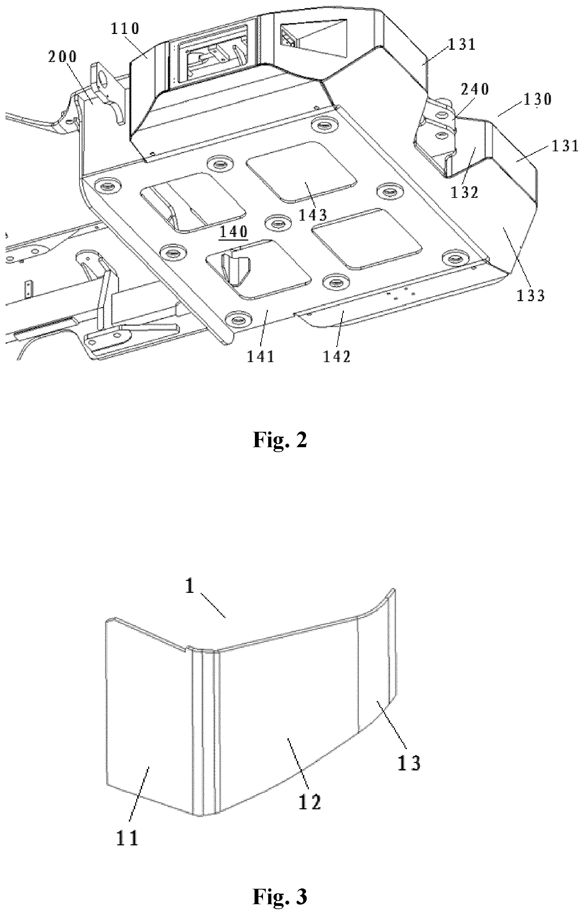

As shown in Fig. 2, the rear anti-collision body portion 130 may comprise a substantially flat intermediate plate 131 and flat or curved inclined plates 132 obliquely extending with respect to it from both sides of the intermediate plate 131. The rear anti-collision body portion 130 may also comprise an upper bottom plate 134 (see Fig. 1) and a lower bottom plate 133, wherein the upper bottom plate 134 may obliquely extend downward to join upper edges of the intermediate plate 131 and the inclined plates 132, while the lower bottom plate 133 may obliquely extend upward to join lower edges of the intermediate plate 131 and the inclined plates 132, thereby forming a closed and generally streamlined hollow structure.

Of course, the parts of the rear anti-collision body portion 130 adjacent to the left and right anti-collision body portions 110, 120 may not comprise an inclined plate 132, but connect with the adjacent plates of the anti-collision body portions 110, 120 via end edges of the intermediate plate 131 and of the upper and lower bottom plates 134, 133.

Preferably, the lower bottom plate 133 of the rear anti-collision body portion 130 may be inclined upward to form an angle greater than or equal to the departure angle of the engineering machine with respect to the horizontal plane.

Further preferably, the middle part of the rear anti-collision body portion 130 may be recessed or hollowed out in order to accommodate, and allow the user to access, the hooking device 240 typically provided at the tail of the vehicle frame. In this case, the intermediate plate 131 is divided into two parts by said recess or hollow part, as can be clearly seen from Figs. 1-2.

Advantageously, in the anti-collision structure of the disclosure, the left anti-collision body portion 110 and the right anti-collision body portion 120 may have substantially the same structure or be formed in substantially the same way. Therefore, the structure of the left anti-collision body portion 110 will be mainly described below.

Still referring to Figs. 1 and 2, the left anti-collision body portion 110 may comprise a front coaming plate assembly 1, an intermediate coaming plate assembly 2, a rear coaming plate assembly 3, and a left upper wing assembly 4. These assemblies 1, 2, 3, and 4 may each be formed from a single plate, or each be spliced from a plurality of different plate pieces. These assemblies 1, 2, 3, and 4 can be combined with one another in a material bonding manner, in particular by welding, so as to form the left anti-collision body portion 110 in a streamlined shape.

Of course, the left anti-collision body portion 110 can also be an integral or one-piece part constructed from a single plate by machining.

Preferred embodiments of the assemblies 1, 2, 3, and 4 constituting the left anti-collision body portion 110 will be described in detail below with reference to Figs. 3-6.

As shown in Fig. 3, the front coaming plate assembly 1 may comprise a connecting plate 11, a main plate 12, and a transition plate 13 sequentially connected together in a material bonding manner, e.g., by welding. The connecting plate 11 may be constructed as a substantially flat plate and may be connected at a rear edge, preferably by means of a rounded or curved transition, to the main plate 12 to form an angle relative to the main plate 12. In particular, the connecting plate 11 and the main plate 12 may have the same size, especially width (i.e., the size measured between the upper and lower edges thereof) at the joint. The main plate 12 may be curved along a direction extending between its upper and lower edges, and may have a gradually decreasing width in a direction directed away from the connecting plate 11 (i.e., in a rearward direction), thereby forming a frustoconical shape. The transition plate 13 may be configured in an arc along a direction extending between its upper and lower edges, be connected to the main plate 12 at its front edge, and be flush with the main plate 12 in the width direction. Another end, i.e., the rear end, of the transition plate 13 may be used for connecting the intermediate coaming plate assembly 2.

As a variant, the front coaming plate assembly 1 may not comprise the connecting plate 11, in which case the main plate 12 may be constructed to have two parts which form an angle to each other. It is also conceivable that the front coaming plate assembly 1 does not comprise the transition plate 13, in which case, the rear edge part of the main plate 12 may be configured in a curved or arc shape with a small curvature.

It should be noted that the connections between various parts of the front coaming plate assembly 1 are preferably smooth, that is, the adjacent parts of two plates at their connection may have uniform shape, width and thickness, without protrusions or projections relative to each other, thus ensuring a perfect streamlined shape of the assembly. Other coaming plate assemblies, such as the intermediate coaming plate assembly 2 and the rear coaming plate assembly 3, may be configured in a similar manner, which will not be elaborated below.

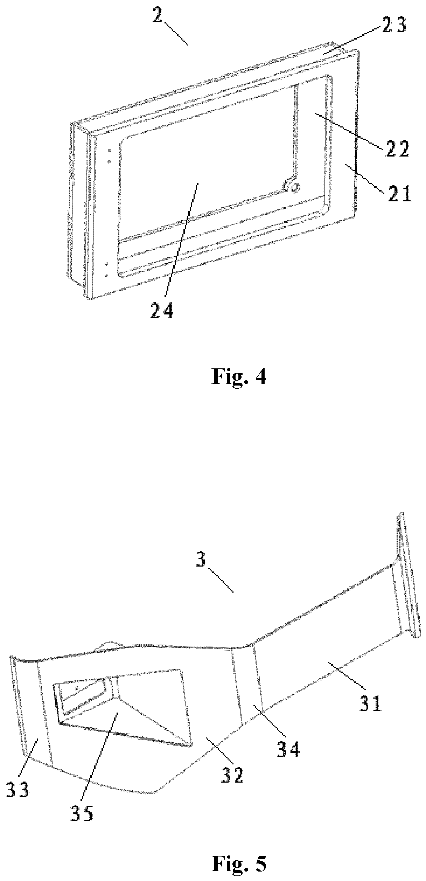

As shown in Fig. 4, the intermediate coaming plate assembly 2 may comprise at least one generally rectangular plate 21. The plate 21 may be generally flat or slightly curved, and may be shaped and sized to connect, at the front and rear ends, the front coaming plate assembly 1 (specifically its transition plate 13) and rear coaming plate assembly 3 smoothly respectively.

According to a particularly preferred embodiment, as shown in Fig. 4, the intermediate coaming plate assembly 2 may comprise two spaced apart rectangular plates 21, 22 connected at their peripheries by a connecting plate 23, thus forming a box-like structure. In addition, advantageously, the two rectangular plates 21, 22 may be provided with substantially aligned central openings 24, so that electrical components and lines can be placed in the box-like structure, and maintenance and installation can be carried out through the central opening 24 on the outer rectangular plate 21.

Referring to Fig. 5, similar to the front coaming plate assembly 1, the rear coaming plate assembly 3 may comprise a connecting plate 31, a main plate 32, and a transition plate 33 sequentially connected together in a material bonding manner, e.g. by welding. The connecting plate 31 may be constructed as a flat or curved plate, and may be preferably connected to the main plate 32 by means of a rounded or curved transition 34 to form an angle with respect to the main plate 32. The main plate 32 may be constructed as a flat or curved plate and has a frustoconical or irregular polygonal shape with a width that gradually decreases towards the rear (here towards the connecting plate 31 ). The transition plate 33 may be configured in an arc shape, and may be connected with the front edge of the main plate 32 via its rear edge.

Here, it should be noted that the configurations of plate portions in these coaming plate assemblies 1, 2, 3 are not limited to the forms described above and shown in the accompanying drawings, but can take any form, as long as it can form a generally streamlined shape after assembly.

In addition, advantageously, between different plates in each coaming plate assembly, such as between the main plate 12 and the connecting plate 11 and between the main plate 32 and the connecting plate 31, the inner faces (i.e. the faces toward the tail frame 200) of the plates may be provided with reinforcing ribs, such as triangular irons, thus ensuring the firmness of the connection between the plates and forming a generally hollow and streamlined shape.

According to a preferred embodiment shown in Fig. 5, the main plate 32 of the rear coaming plate assembly 3 may be configured to have an inwardly concave portion, thereby forming a rearwardly open cavity 35. The cavity 35 may be used, for example, to receive a rear tail light, which is usually mounted at the rear of the vehicle frame.

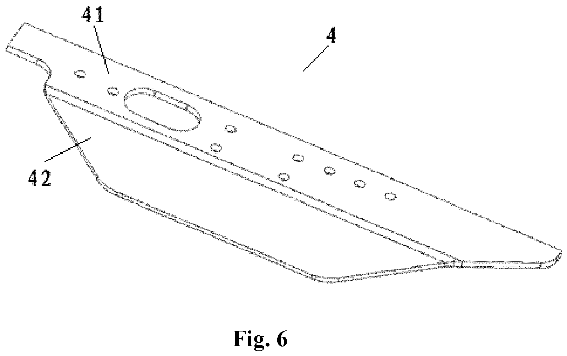

Referring now to Fig. 6, as well as Figs. 1-2, the left upper wing assembly 4 may comprise a strip plate 41 and a trapezoidal plate 42 connected together in a material bonding manner, e.g. by welding. As can be seen especially from Fig. 1, said strip plate 41 may be used to engage the upper edge or upper face of the left side wall 210 of the tail frame 200 and has a width greater than the width of the upper face, so as to have a portion protruding from the upper face after attachment. Rounded or elongated holes may be formed in the strip plate 41 for the installation of required components (e.g. the cover of the tail frame 200) and the passage of the electrical cables.

The trapezoidal plate 42 may be obliquely connected to the strip plate 41, and may have an appropriate size or form to engage the upper edges of the front coaming plate assembly 1, the intermediate coaming plate assembly 2, and the rear coaming plate assembly 3, making the left anti-collision body portion 110 closed at the upper end, thus facilitating the formation of a streamlined shape, and preventing foreign objects from falling into the left anti-collision body portion 110.

Returning to Figs. 1-2, advantageously, the anti-collision structure of the disclosure may further comprise a bottom anti-collision body portion 140 intended to cover the bottom of the tail frame 200. The bottom anti-collision body portion 140 may comprise a main bottom plate 141 and two side bottom plates 142 disposed on both sides of the main bottom plate 141. The main bottom plate 141 may have a shape and a size matched with the opening of the tail frame 200. The side bottom plate 142 may be inclined relative to the main bottom plate 141, and may have a size and form matched with the lower edges of the left and right anti-collision body portions 110 and 120, so as to close the lower edges and form a closed and hollow streamlined structure.

As an alternative, the bottom anti-collision body portion 140 may only comprise the main bottom plate 141. In this case, the portions corresponding to the side bottom plate 142 may be formed in the left and right anti-collision body portions 110 and 120. These side bottom plates may, for example, have a structure similar to the left upper wing assembly 4 of the left anti-collision body portion 110.

In addition, the lower bottom plate 133 of the rear anti-collision body portion 130 may be used as a part of the bottom anti-collision body portion 140 and connected to the rear edge of the main bottom plate 141.

Preferably, as shown in Figs. 1 and 2, the main bottom plate 141 of the bottom anti-collision body portion 140 may be provided with one or more through openings 143 for discharging foreign objects, such as rainwater, which may fall into the tail frame 200.

### Industrial Applicability

The anti-collision structure of the disclosure may be formed as follows. Firstly, each of the coaming plate assemblies is assembled by welding. For example, the connecting plate 11, the main plate 12 and the transition plate 13 are weld together to form a front coaming plate assembly 1; the rectangular plates 21, 22 and the connecting plate 23 are weld together to form an intermediate coaming plate assembly 2; the connecting plate 31, the transition section 34, the main plate 32, and the transition plate 33 are weld together to form a rear coaming plate assembly 3; and the strip plate 41 and the trapezoidal plate 42 are weld together to form a left upper wing assembly 4. Then the coaming plate assemblies 1, 2 and 3 are assembled together by welding to form a left anti-collision body portion 110; and the right anti-collision body portion 120, the rear anti-collision body portion 130, and the bottom anti-collision body portion 140 are respectively formed in a similar manner. Next, these anti-collision body portions 110, 120, 130 and 140 are weld together, and the integrated anti-collision structure thus formed is mounted onto the tail frame 200 by welding.

Here, advantageously, the upper members in the anti-collision body portions, such as the left upper wing assembly 4 of the left anti-collision body portion 110 and the upper bottom plate 134 of the rear anti-collision body portion 130, may be welded with other members in the corresponding anti-collision body portions only when the latter are finally assembled onto the tail frame 200, so as to facilitate the assembly and welding operation.

Of course, it can also be envisaged that the anti-collision body portions 110, 120, 130, 140 are formed and welded to the left and right side walls 210, 220, the rear end wall 230, and the bottom wall of the tail frame 200 respectively, and then welded together with each other at their adjacent parts to form a complete anti-collision structure installed on the tail frame 200.

According to the disclosure, the anti-collision body of the anti-collision structure is preferably connected to the tail frame 200 by material bonding (especially welding), and the tail frame 200 is preferably connected to the main frame of the engineering machine by material bonding. This type of connection can disperse the stress evenly in the event of an impact, which effectively ensures the strength and impact resistance of the anti-collision structure.

The lateral anti-collision body (especially the left anti-collision body 110) of the anti-collision structure of the disclosure comprises a hollow box-like structure, and a streamlined smooth transition is formed on its outer surface. This makes the anti-collision body have enough strength and rigidity to meet the anti-collision requirements, while allowing the electrical components and lines being placed inside the box-like structure, and providing an access window for facilitating maintenance and installation.

Although the general concept of the present disclosure has been described in conjunction with the embodiments, those skilled in the art can understand that various changes and modifications can be made to these embodiments without departing from the principle and spirit of the general concept of the present disclosure.

## Claims

1. An anti-collision structure for an engineering machine, the engineering machine having a tail frame (200) at its rear end, **characterized in that** the anti-collision structure comprises an anti-collision body that at least partially covers side walls (210, 220) and a rear end wall (230) of the tail frame, wherein the anti-collision body is made of plates and configured to have a streamline shape and a hollow structure.

2. The anti-collision structure according to claim 1, **characterized in that** the anti-collision body is constructed as an integral component, and is installed on the tail frame (200) by welding.

3. The anti-collision structure according to claim 1 or 2, **characterized in that** the anti-collision body comprises a left anti-collision body portion (110), a right anti-collision body portion (120), and a rear anti-collision body portion (130) that cover a left side wall (210), a right side wall (220), and a rear end wall (230) of the tail frame (200), respectively; the left and right anti-collision body portions each have a streamline shape in the longitudinal direction, the rear anti-collision body portion has a streamline shape in the transverse direction, wherein a lower bottom plate (133) of the rear anti-collision body portion inclines upward to form an angle greater than or equal to a departure angle of the engineering machine relative to a horizontal plane.

4. The anti-collision structure according to claim 3, **characterized in that** the left anti-collision body portion (110) comprises a front coaming plate assembly (1), an intermediate coaming plate assembly (2), a rear coaming plate assembly (3), and a left upper wing assembly (4), wherein the front coaming plate assembly and the rear coaming plate assembly each comprise a main plate that is generally frustoconically shaped and an arc-shaped transition plate connected to the main plate; the intermediate coaming plate assembly comprises at least one rectangular plate; the left upper wing assembly comprises a strip plate (41) and a trapezoidal plate (42) connected at an angle relative to each other.

5. The anti-collision structure according to claim 4, **characterized in that** the intermediate coaming plate assembly (2) comprises two rectangular plates (21, 22) separated from each other, which have aligned central openings (24) and are connected at their peripheries via a connecting plate (23) so as to form a box-like structure.

6. The anti-collision structure according to claim 4, **characterized in that** the main plate of the rear coaming plate assembly (3) is constructed to have an inward cavity (35).

7. The anti-collision structure according to claim 4, **characterized in that** the right anti-collision body portion (120) has a same structure as the left anti-collision body portion (110).

8. The anti-collision structure according to claim 4, **characterized in that** the anti-collision body further comprises a bottom anti-collision body portion (140) intended to cover a bottom of the tail frame (200), the bottom anti-collision body portion includes a main bottom plate (141) and side bottom plates (142) arranged on both sides of the main bottom plate.

9. The anti-collision structure according to claim 8, **characterized in that** the main bottom plate (141) is provided with one or more through openings (143).

10. The anti-collision structure according to claim 8, **characterized in that** the left anti-collision body portion (110), the right anti-collision body portion (120), the rear anti-collision body portion (130), and the bottom anti-collision body portion (140) are welded together.

11. An engineering machine, **characterized by** comprising a tail frame (200) arranged at a rear end thereof, and an anti-collision structure according to one of the preceding claims mounted on the tail frame.

12. The engineering machine according to claim 11, **characterized in that** the tail frame (200) is constructed to accommodate a power battery pack of the engineering machine.
